# EUROPÄISCHE PATENTSCHRIFT

(11) **EP 1 817 226 B1**
(45) Veröffentlichungstag und Bekanntmachung des Hinweises auf die Patenterteilung: **12.01.2011**
(21) Anmeldenummer: 05807976.5
(22) Anmeldetag: 09.11.2005
(51) Int. Cl.: B64C 3/50, B64C 9/14

(54) **HAUPTFLÜGEL/ZUSATZFLÜGEL-ANORDNUNG FÜR FLUGZEUGE MIT EINER VORRICHTUNG ZUR MINDERUNG DES AERODYNAMISCHEN LÄRMS**
MAIN AND SUPPLEMENTARY AIRCRAFT WING ARRANGEMENT WITH SYSTEM FOR REDUCING AERODYNAMIC NOISE
CONFIGURATION D'AILE PRINCIPALE ET AILE AUXILIAIRE D'AVION AVEC DISPOSITIF PERMETTANT DE REDUIRE LE BRUIT AERODYNAMIQUE

(30) Priorität: 23.11.2004 DE 102004056537
(43) Veröffentlichungstag der Anmeldung: 15.08.2007
(73) Patentinhaber: Airbus Operations GmbH, 21129 Hamburg (DE)
(72) Erfinder: LORKOWSKI, Thomas, 82024 Taufkirchen (DE); GROHMANN,Boris, 82024 Taufkirchen (DE)
(74) Vertreter: Avenhaus, Beate
(86) Internationale Anmeldenummer: PCT/DE2005/002003
(87) Internationale Veröffentlichungsnummer: WO 2006/056160

(56) Entgegenhaltungen:
- DE-A1- 19 925 560
- DE-C- 715 266
- FR-A- 1 011 175

## Beschreibung

Die Erfindung betrifft eine Hauptflügel/Zusatzflügel-Anordnung für Flugzeuge mit einer Vorrichtung zur Minderung des aerodynamischen Lärms nach dem Oberbegriff des Anspruchs 1.

Aus DE 715 266 ist ein Flugzeugflügel mit Wölbungsklappen nach dem Oberbegriff des Anspruchs 1 bekannt.

Moderne Verkehrsflugzeuge verfügen über Hochauftriebskomponenten in Form von Zusatzflügeln, wie z.B. an der Vorderkante des Hauptflügels vorgesehene bewegliche Vorflügel (engl, "slat") oder Landeklappen, die bei Start und Landung zur Erhöhung des Auftriebs bei niedriger Geschwindigkeit betätigt werden. Diese Zusatzflügel sind an den Hauptflügel angelenkt und unter Freigabe eines Spaltbereichs zwischen dem Hauptflügel und dem Zusatzflügel ausfahrbar. Ein wesentliches Problem besteht darin, dass bei ausgefahrenem Zusatzflügel auf Grund einer Wirbelströmung im Spaltbereich betrachtlicher aerodynamischer Lärm erzeugt wird, was insbesondere in Bodennähe als, sehr störend empfunden wird.

Auf der Rückseite eines Vorflügels beispielsweise, ist eine Hohlkehle vorhanden, in der sich im ausgefahrene Zustand des Vorflügels eine Strömungsablösung der Spaltströmung in Form eines Wirbels ausbildet. Dieser Wirbel wird durch die angrenzende Spaltströmung ständig mit neuer Energie versorgt. Dabei gelangen über eine Trennstromlinie zwischen dem Wirbelströmungsgebiet und der Spaltströmung kontinuierlich Turbulenzballen in die beschleunigte Spaltströmung, wodurch Lärm entsteht. Lärm wird aber durch die Abströmung der Turbulenzballen über die Hinterkante des Vorflügels abgestrahlt.

Aus dem Stand der Technik sind verschiedene Vorrichtungen zur Minderung dieses aerodynamischen Lärms arm Zusatzflügel eines Verkehrflugzeugs bekannt, bei denen eine bei ausgefahrenem Zusatzflügel in den Spaltbereich verlagerbare Trennfläche vorgesehen ist, die in Spannweitenrichtung ausgedehnt ist und sich zumindest teilweise entlang einer Trennstromlinie zwischen dem Wirbelströmungsgebiet und der Spaltströmung der im Spaltbereich zwischen dem Zusatzflügel und dem Hauptflügel strömenden Luft erstreckt.

So ist beispielsweise aus der DE 199 25 560 A1 ein Zusatzflügel für Hauptflügel von Flugzeugen bekannt, bei dem eine solche Vorrichtung zur Minderung des aerodynamischen Lärms in Form einer an dem Zusatzflügel angeordneten Trennfläche vorgesehen ist, die sich in Richtung des Hauptflügels erstreckt und entlang einer Trennstromlinie zwischen dem Wirbelströmungsgebiet und der Spaltströmung der zwischen dem Zusatzflügel und dem Hauptflügel strömenden Luft verläuft. Diese Trennfläche kann in starrer Form vorgesehen sein, wobei sie an den Zusatzflügel angelenkt und einschwenkbar ist, wenn der Zusatzflügel an den Hauptflügel eingefahren wird oder bei verändertem Flugzeuganstellwinkel eine Anpassung der Winkelstellung der Trennfläche erforderlich ist. Andererseits kann die Trennfläche auch flexibel ausgebildet sein, beispielsweise in Form eines aufblasbaren Ballons oder Verdrängungskörpers, der an dem Zusatzflügel angebracht und mit Druck beaufschlagbar ist, wenn der Zusatzflügel ausgefahren wird.

Aus der DE 100 19 185 A1 ist eine Vorrichtung zur Minderung des aerodynamischen Lärms an einem Vorflügel eines Verkehrsflugzeugs bekannt, bei der in einer an die Außenkontur des Hauptflügels angepassten Profilwölbung an der Rückseite des Vorflügels ein hohler Verdrängungskörper angeordnet ist, welcher mittels einer geregelten Bleed-Air-Leitung wahlweise aufblasbar ist, so dass durch diesen eine Trennfläche gebildet wird, die das Wirbelströmungsgebiet von der Spaltströmung im Spaltbereich zwischen Vorflügel und Hauptflügel trennt. Bei einer weiteren Vorrichtung zur Minderung des aerodynamischen Lärms am Vorflügel eines Verkehrsflugzeugs, die aus der DE 101 57 849 A1 bekannt ist, ist eine Trennfläche, die sich teilweise entlang einer Trennstromlinie zwischen dem Wirbelströmungsgebiet und der Spaltströmung der im Spaltbereich zwischen dem Vorflügel und dem Hauptflügel strömenden Luft erstreckt, aus mehreren seriell angeordneten Bürstenhaaren gebildet, die über die Vorflügel-Spannweite verteilt und wenigstens einreihig angeordnet sind.

Eine weitere Vorrichtung zur Minderung des aerodynamischen Lärms am Vorflügel eines Verkehrsflugzeugs, bei der eine Trennfläche zwischen dem Wirbelströmungsgebiet und der Spaltströmung der im Spaltbereich zwischen dem Zusatzflügel und dem Hauptflügel strömenden Luft durch einen mittels Bleed-Air aufblasbaren Verdrängungskörper gebildet ist, ist aus der DE 100 19 187 C1 bekannt.

Der Nachteil von klappen-, schieberförmigen oder ähnlichen Vorrichtungen besteht darin, dass derartige Strukturen das Wirbelströmungsgebiet meist nur unzureichend abbilden bzw. abdecken. Gegebenenfalls bilden sich an anderer Stelle lärmabstrahlende Wirbel. Zudem ist eine aufwendige kinematische Aktuatorik für die Betätigung und Steuerung derartiger Strukturen erforderlich.

Aufblasbare Strukturen mit elastischen bzw. "weichen" Oberflächen können zwar die gewünschte Kontur gut abbilden, jedoch ist die systemtechnische Umsetzung schwierig. Meist sind aufwendige Ventilverschaltungen erforderlich, um den Lufteinlass und -auslass zu regeln. Bei der Verwendung von Bleed-Air ist zudem auf Grund deren hoher Temperatur, die typischerweise größer oder gleich 280° C ist, eine spezielle Materialauswahl erforderlich. Ein weiterer Nachteil besteht darin, dass geeignete elastische Materialien alterungsanfällig, verletzungsanfällig und UV-unbeständig sind, was die Einsatzdauer deutlich einschränkt bzw. den Wartungsaufwand erheblich erhöht.

Somit besteht die Aufgabe der Erfindung darin, eine verbesserte Vorrichtung zur Minderung des aerodynamischen Lärms bei einer bei einer Hauptflügel/Zusatzflügel-Anordnung einesFlugzeugs zu schaffen, die insbesondere einfach aufgebaut ist und einfach, zuverlässig und dauerhaft betreibbar ist. Zudem soll die Anordnung ein zuverlässiges Ausfallverhalten aufweisen.

Diese Aufgabe wird durch eine Anordnung mit den Merkmalen des Anspruchs 1 gelöst.

Vorteilhafte Ausführungsformen und Weiterbildungen der erfindungsgemäßen Anordnung sind in den Unteransprüchen angegeben.

Durch die Erfindung wird eine Hauptflügel- / Zusatzflügel- Anordnung für Flugzeuge geschaffen, wobei der Zusatzflügel an dem Hauptflügel angelenkt und unter Freigabe eines Spaltbereichs zwischen dem Hauptflügel und dem Zusatzflügel ausfahrbar ist.

Die Anordnung umfasst eine Vorrichtung zur Minderung aerodynamischen Lärms bestehend aus einer Aktuatoreinrichtung und eine Trennfläche, wobei die Trennfläche bei ausgefahrenem Zusatzflügel in eine vorgeschobene Position in den Spaltbereich verlagerbar ist in welcher sie entweder ein Wirbelströmungsgebiet zumindest teilweise von einer spaltströmung der im Spaltbereich zwischen Zusatzflügel und Hauptflügel strömenden Luft abgetrennt, oder den Raum der Spaltströmung einnimmt.

Die Trennfläche ist ein starres oder biegeweiches Flächenmaterial, welches in der Lage ist eine Anzahl n (n=1, 2, 3, 4, 5,.... 10) von stabilen Zuständen einzunehmen, die in ihrem jeweiligen stabilen Zustand ohne Aktuatoreinwirkung oder ohne Einwirkung von Stellkräften verweilt: und die durch Betätigung der Aktuatoreinrichtung zwischen mindestens einem der stabilen Zustände und mindestens einem weiteren Zustand verlagerbar ist.

Erfindungsgemäß kehrt die Trennfläche zur Ausfalisicherheit aus einer vorgeschobenen Position nach Ende der Betätigung der Aktuatoreinrichtung oder bei Ausfall der Aktuatoreinrichtung
oder beim Noteinfahren des Zusatzflügels automatisch in einen stabilen Zustand, in dem die Trennfläche eine aus dem Spaltbereich zurückgezogenene Stellung einnimmt.

Die erfindungsgemäße Lösung ermöglicht es auf einfache Weise die aerodynamisch wirksame Oberfläche Wirbelströmungen verursachender Hohlkehlen von Zusatzflügeln oder Hauptflügeln derart zu verlagern, dass die Wirbelbildung völlig oder signifikant reduziert ist.

Gemäß einer vorteilhaften Ausführungsform der erfindungsgemäßen Anordnung ist die Trennfläche eine mono-stabile (n = 1) Fläche, die selbständig einen stabilen Zustand einnimmt, aus dem sie durch Betätigung der Aktuatoreinrichtung verlagerbar ist.

Dabei kann die mono-stabile Trennfläche so ausgebildet sein, dass sie nach Ende oder bei Ausfall der Betätigung der Aktuatoreinrichtung selbständig in den stabilen Zustand zurückkehrt. Dies hat den Vorteil, dass dadurch auf einfache Weise eine Ausfallsicherheit gewährleistet ist, da die Trennfläche aus ihrem stabilen Zustand nur durch Betätigung der Aktuatoreinrichtung in einen weiteren Zustand verlagerbar ist und in diesem weiteren Zustand nur solange verweilt, wie die Aktuatoreinrichtung aktiv ist. Endet die Betätigung, d.h. ist die Aktuatoreinrichtung inaktiv, was auch durch einen Ausfall der Aktuatoreinrichtung hervorgerufen werden kann, geht die Trennfläche automatisch in ihren stabilen Zustand zurück.

Vorzugsweise nimmt die mono-stabile Trennfläche in ihrem stabilen Zustand eine aus dem Spaltbereich zurückgezogene Position ein, bei der der Zusatzflügel unter Schließen des Spaltbereichs an den Hauptflügel einfahrbar ist, und die mono-stabile Trennfläche nimmt bei durch Ausfahren des Zusatzflügels freigegebenem Spaltbereich durch bzw. während der Betätigung der Aktuatoreinrichtung eine vorgeschobene Position ein, in der sie das Wirbelströmungsgebiet zumindest teilweise von der Spaltströmung abtrennt oder deren Raum einnimmt. Dies hat den Vorteil, dass beim Ausfall der Aktuatoreinrichtung die Trennfläche automatisch in ihre zurückgezogene Position kehrt, um das Einfahren des Zusatzflügels im Notfall problemlos zu ermöglichen. Letzteres muss auf Grund von entsprechenden Sicherheitsanforderungen an Verkehrsflugzeuge gewährleistet sein.

Zweckmäßigerweise ist die mono-stabile Trennfläche aus einem Material mit federnd elastischen Struktureigenschaften ausgebildet. Alternativ oder ergänzend können zusätzliche Einrichtungen, insbesondere eine Federeinrichtung (Springfeder, Schaum oder dergleichen), bereitgestellt sein, unter deren Einwirkung die Trennfläche automatisch in ihren stabilen Zustand zurückkehrt.

Gemäß einer anderen vorteilhaften Ausführungsform der erfindungsgemäßen Anordnung ist die Trennfläche eine bi-stabile (n = 2) Fläche, die zwei stabile Zustände aufweist, zwischen denen sie durch Betätigung der Aktuatoreinrichtung verlagerbar ist. Dies hat den Vorteil, dass die Aktuatoreinrichtung nur zum Verlagern der Trennfläche von einem stabilen in den anderen stabilen Zustand aktiviert werden muss. Die beiden stabilen Zustände bleiben jeweils ohne Einwirkung der Aktuatoreinrichtung bzw. ohne Einwirkung von Stellkräften erhalten, was die Steuerung der Aktuatoreinrichtung vereinfacht und gegebenenfalls deren Stromverbrauch reduziert.

Vorzugsweise ist diese Ausführungsform so ausgebildet, dass die bi-stabile Trennfläche in ihrem einen stabilen Zustand eine aus dem Spaltbereich zurückgezogene Position einnimmt, bei der der Zusatzflügel unter Schließen des Spaltbereichs an den Hauptflügel einfahrbar ist, und dass die bi-stabile Trennfläche bei durch Ausfahren des Zusatzflügels freigegebenem Spaltbereich in ihrem anderen stabilen Zustand eine vorgeschobene Position einnimmt, in welcher sie das Wirbelströmungsgebiet zumindest teilweise von der Spaltströmung abtrennt oder deren Raum einnimmt. Die Ausfallsicherheit wird bei dieser Ausführungsform zweckmäßigerweise dadurch gewährleistet, dass beim Noteinfahren des Zusatzflügels dieser gegen die ausgefahrene bzw. vorgeschobene Trennfläche drückt, was dazu führt, dass die Trennfläche quasi "umschnappt" und in ihren anderen stabilen Zustand, dem eingefahrenen bzw. zurückgezogenen übergeht.

Vorteilhafterweise lassen sich die beiden stabilen Zustände der bi-stabilen Trennfläche durch federnd elastische Struktureigenschaften der Trennfläche, durch Rastereinrichtungen - wie sie beispielsweise bei Fahrradschaltungen verwendet werden - und/oder durch getrennte Einrichtungen, insbesondere eine Federeinrichtung, selbständig einstellen.

Gemäß weiteren vorteilhaften Ausführungsformen ist die Trennfläche eine n-stabile (n ≥ 3) Fläche, die n (n ≥ 3) stabile Zustände einzunehmen in der Lage ist, zwischen denen sie durch Betätigung der Aktuatoreinrichtung verlagerbar ist. Zweckmäßigerweise beträgt n 3, 4, 5 ... oder 10.

Zweckmäßigerweise nimmt die n-stabile Trennfläche in mindestens einem ihrer stabilen Zustände eine aus dem Spaltbereich zurückgezogene Position ein, bei der der Zusatzflügel unter Schließen des Spaltbereichs an den Hauptflügel einfahrbar ist, wobei die n-stabile Trennfläche bei durch Ausfahren des Zusatzflügels freigegebenem Spaltbereich in mindestens einem ihrer anderen stabilen Zustände eine vorgeschobene Position einnimmt, in der sie das Wirbelströmungsgebiet zumindest teilweise von der Spaltströmung abtrennt oder deren Raum einnimmt.

Bei der n (n ≥ 3) stabilen Trennfläche lassen sich die n-stabilen Zustände zweckmäßigerweise durch Rasereinrichtungen, wie bereits im Zusammenhang mit einer bi-stabilen Trennfläche erwähnt, und/oder durch zusätzliche Einrichtungen, insbesondere eine Federeinrichtung (Springfeder, Schaum oder dergleichen), automatisch einstellen.

Gemäß einer vorteilhaften Ausführungsform der Erfindung ist die Trennfläche eine das Wirbelströmungsgebiet zumindest teilweise abdeckende Fläche, die entlang einer in Spannweitenrichtung verlaufenden Linie zumindest einseitig gelenkig gelagert oder zumindest einseitig fest eingespannt ist.

Gemäß einer alternativen vorteilhaften Ausführungsform der Erfindung ist die Trennfläche eine das Wirbelströmungsgebiet zumindest teilweise oder ganz abdeckende Fläche, die beidseitig entlang in Spannweitenrichtung verlaufender Linien gelagert ist.

Gemäß einer bevorzugten Ausführungsform hiervon kann die Abmessung der Trennfläche zwischen den in Spannweitenrichtung verlaufenden Linien, entlang derer die Trennfläche gelagert ist, größer als der gegenseitige Abstand dieser Linien sein.

Dabei kann, gemäß einer Ausführungsform der Erfindung, die Trennfläche an beiden Seiten entlang der in Spannweitenrichtung verlaufenden Linien gelenkig gelagert sein.

Gemäß einer alternativen Ausführungsform ist die Trennfläche an einer Seite fest eingespannt und an der anderen Seite entlang einer in Spannweitenrichtung verlaufenden Linie gelenkig gelagert.

Gemäß einer weiteren Alternative ist die Trennfläche auch beidseitig entlang in Spannweitenrichtung verlaufender Linien fest eingespannt.

Gemäß einer vorteilhaften Ausführungsform der Erfindung ist die Trennfläche durch ein biegeweiches Flächenmaterial gebildet.

Das Flächenmaterial kann ein biegeweiches Metallblech, ein glasfaserverstärkter Kunststoff (GFK), ein kohlefaserverstärkter Kunststoff (CFK), ein faserverstärktes Polymer oder ein faserverstärktes Elastomer sein.

Die Aktuatoreinrichtung kann ein Drehaktuator sein, der an mindestens einer Seite, an der die Trennfläche entlang der in Spannweitenrichtung verlaufenden Linien gelagert ist, zur Verlagerung der Trennfläche zwischen dem mindestens einen stabilen Zustand und dem mindesten einen weiteren Zustand mit dieser gekoppelt ist.

Die Aktuatoreinrichtung kann auch ein Linearaktuator sein, der mit der Trennfläche zur Verlagerung derselben zwischen dem mindestens einen stabilen Zustand und dem mindestens einen weiteren Zustand gekoppelt ist.

Die Aktuatoreinrichtung kann aber auch ein Fluidaktuator sein, der mit der Trennfläche zur Verschiebung derselben zwischen dem mindestens einen stabilen Zustand und dem mindestens einen weiteren Zustand gekoppelt ist, wobei der Fluidaktuator einen fluidbeaufschlagbaren Verdrängungskörper umfasst, der im Wirbelströmungsgebiet angeordnet ist.

Die Aktuatoreinrichtung kann durch Stellmotor, Elektromotor oder Elektromagnet angetrieben sein.

Die Aktuatoreinrichtung kann aber auch ein pneumatischer oder hydraulischer Aktuator sein.

Die Aktuatoreinrichtung kann einfach oder doppelt wirkend ausgebildet sein, wobei unter doppelt wirkend zu verstehen ist, dass der Aktuator Kraftwirkungen in entgegengesetzte Richtungen hervorrufen kann; d.h. der Aktuator kann sowohl Ziehen als auch Drücken.

Die Aktuatoreinrichtung kann doppelt oder mehrfach redundant ausgebildet sein.

Gemäß einer weiteren Alternative kann die Aktuatoreinrichtung als Seil, Hebel, Mitnahmestift oder dergleichen ausgebildet sein, wobei diese vorzugsweise mit einer Betätigungseinrichtung zum Einfahren bzw. Ausfahren der Zusatzflügel kinetisch gekoppelt sind.

Vorzugsweise ist an der Rückseite des Flügels, an dem die Trennfläche angebracht ist, eine Hohlkehle ausgebildet, in welche die Trennfläche in eine aus dem Spaltbereich zurückgezogene Position verlagerbar ist, bei der der Zusatzflügel unter Schließen des Spaltbereichs an den Hauptflügel einfahrbar ist.

Besonders vorteilhaft ist dabei die Kontur der Trennfläche in zurückgezogener Position im wesentlichen an die Kontur der Hohlkehle angepasst.

Gemäß einer besonders vorteilhaften Ausführungsform der Erfindung ist der Zusatzflügel ein Vorflügel oder eine Landeklappe.

Im Folgenden werden Ausführungsbeispiele der Erfindung anhand der Zeichnung erläutert.

Es zeigt:
**Fig.1** eine Querschnittsansicht eines Flugzeugflügels mit Zusatzflügeln in Form eines Vorflügels und einer Landeklappe in ausgefahrenem Zustand, sowie der Strömungslinien der Flügel und Zusatzflügel umströmenden Luft;
**Fig. 2** eine vergrößerte Darstellung der Flügelvorderkante eines Hauptflügels und des Vorflügels in ausgefahrenem Zustand, wobei an der Rückseite des Vorflügels eine in den Spaltbereich zwischen Vorflügel und Hauptflügel verlagerbare Trennfläche vorgesehen ist;
**Fig. 3** eine schematisierte Darstellung der vier sogenannten Eulerschen Knickfälle;
**Fig. 4a****) bis c)** Querschnittsansichten durch einen Vorflügel mit einer in den Spaltbereich verlagerbaren bi-stabilen Trennfläche, mit verschiedenen Arten der Betätigung gemäß drei Ausführungsbeispielen der Erfindung;
**Fig. 5a****) bis c)** Querschnittsansichten durch einen Vorflügel mit einer in den Spaltbereich verlagerbaren mono-stabilen Trennfläche, mit verschiedenen Arten der Betätigung gemäß drei weiteren Ausführungsbeispielen der Erfindung;
**Fig. 6a****) bis c)** Querschnittsansichten durch einen Vorflügel mit jeweils einer Trennfläche, die in den Spaltbereich verlagerbar ist, gemäß drei weiteren Ausführungsbeispielen mit verschiedenen Arten der Betätigung gemäß drei weiteren Ausführungsbeispielen der Erfindung; und
**Fig. 7a****) bis c)** Querschnittsansichten durch einen Vorflügel mit einer in den Spaltbereich verlagerbaren Trennfläche, die ähnlich den Ausführungsbeispielen von Figur 4 bi-stabil ausgebildet ist, mit doppelt redundanter Betätigung.

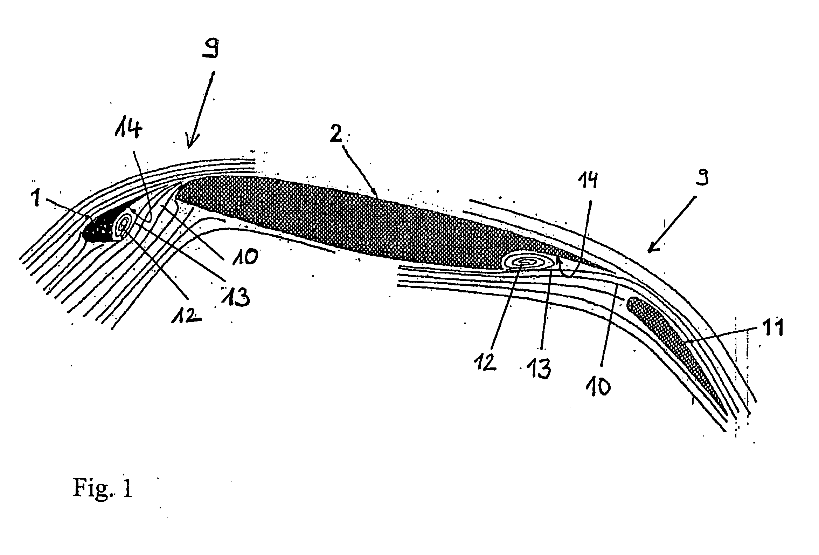

In Figur 1 ist ein Hauptflügel 2 eines Flugzeugs dargestellt, an dem Zusatzflügel in Form eines Vorflügels 1 und einer Landeklappe 11 angeordnet sind. Die Zusatzflügel 1, 11 sind an dem Hauptflügel 2 angelenkt und unter Freigabe von Spaltbereichen 9 zwischen dem Hauptflügel 2 und dem jeweiligen Zusatzflügel 1, 11 ausfahrbar. Die Zusatzflügel 1, 11 dienen zur Erhöhung des Auftriebs bei niedrigen Geschwindigkeiten, wie bei Start, Landung und Landeanflug. In ausgefahrenem Zustand geben die Zusatzflügel 1, 11 jeweilige Spaltbereiche 9 frei, in denen sich eine Spaltströmung 10 der zwischen dem Zusatzflügel 1, 11 und dem Hauptflügel 2 strömenden Luft und jeweilige Wirbelströmungsgebiete 12 ausbilden. Die Wirbelströmungsgebiete 12 bilden sich in Profilwölbungen 14 aus, die die Form einer Hohlkehle besitzen und dazu dienen, im eingefahrenen Zustand einen im Wesentlichen glatten Anschluss von Zusatzflügel 1, 11 und Hauptflügel 2 herzustellen. Die Wirbelströmungsgebiete 12 sind stark fluktuierend und führen zu einer ungewünschten Lärmentstehung, da über die Trennstromlinien 13 zwischen den Wirbelströmungsgebieten 12 und den Spaltströmungen 10 kontinuierlich Turbulenzballen in die beschleunigte Spaltströmung 10 gelangen.

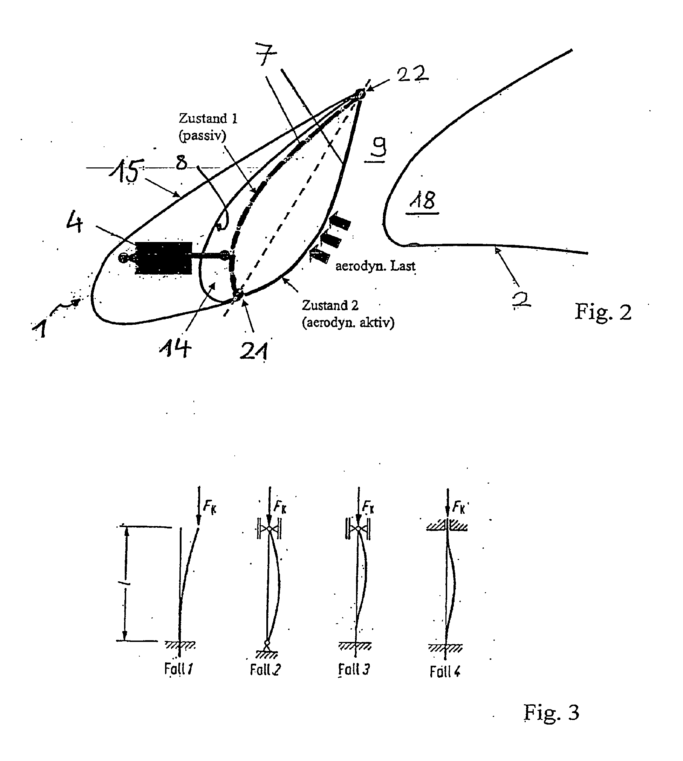

Figur 2 zeigt ein Ausführungsbeispiel einer vorrichtung zur Minderung des aerodynamischen Lärms an einem Flugzeugvorflügel 1. Der Vorflügel 1 ist an dem Hauptflügel 2 angelenkt und unter Freigabe des Spaltbereichs 9 zwischen dem Hauptflügel 2 und dem Vorflügel 1 ausfahrbar, beispielsweise mit Betätigungseinrichtungen, die als "slat tracks" oder "flap tracks" bezeichnet sind, aber in Figur 2 nicht dargestellt sind. Dieser ausgefahrene Zustand ist in Figur 2 dargestellt ist. Der Vorflügel 1 verfügt über eine, bezogen auf die Flugrichtung, im vorderen Bereich vorgesehene äußere Beplankung 15 und eine hinter Profilwölbung 14. Die hintere Profilwölbung 14 ist in Form einer Hohlkehle 8 ausgebildet und an die Form der Flügelvorderkante 18 des Hauptflügels 2 angepasst ist, um im eingefahrenen Zustand einen im wesentlichen glatten Übergang zu gewährleisten. Dabei ist zwischen einem ersten Gelenk 21, das an einer in Spannweitenrichtung verlaufenden Linie (d.h. senkrecht zur Zeichenebene in Figur 2) am unteren Ende der Profilwölbung 14 vorgesehen ist, und einem zweiten Gelenk 22, das an einer ebenfalls in Spannweitenrichtung verlaufenden Linie am oberen Ende der Profilwölbung 14 vorgesehen ist, eine Trennfläche 7 angeordnet, die in Spannweitenrichtung ausgedehnt ist und sich bei ausgefahrenem Vorflügel 1 zumindest teilweise entlang der Trennstromlinie 13 zwischen dem Wirbelströmungsgebiet 12 und der Spaltströmung 10 der im Spaltbereich 9 zwischen Vorflügel 1 und Hauptflügel 2 strömenden Luft erstreckt (vergleiche auch Figur 1).

Allgemein ist die Trennfläche 7 eine n-stabile Fläche, die mittels einer Aktuatoreinrichtung 4 zwischen mindestens einem der n-stabilen Zustände und mindestens einem weiteren Zustand verlagerbar ist. Die Konturfindung und das Kraft-Weg-Verhalten der Trennfläche 7 können beispielsweise mittels der bekannten Eulerschen Knickstabformeln (siehe auch Figur 3) bestimmt werden. Selbstverständlich können hierzu auch andere bekannte Verfahren verwendet werden.

Bei dem in Figur 2 gezeigten Ausführungsbeispiel ist die Trennfläche 7 eine bi-stabile (n = 2) Fläche, die zwei stabile Zustände einzunehmen in der Lage ist, nämlich die in Figur 2 dargestellten Zustände 1 und 2. Im stabilen Zustand 1 nimmt die Trennfläche 7 eine aus dem Spaltbereich 9 zurückgezogenen Position ein, bei der der Vorflügel 1 unter Schließen des Spaltbereichs 9 an den Hauptflügel 2 einfahrbar ist. Bei ausgefahrenem Vorflügel 1 und damit freigegebenem Spaltbereich 9 nimmt die bi-stabile Trennfläche 7 im stabilen Zustand 2 eine in den Spaltbereich 9 vorgeschoben Position ein, d.h. die Trennfläche 7 ist im Spaltbereich 9 entlang der Trennstromlinie 13 (siehe Figur 1) angeordnet, um das Wirbelströmungsgebiet 12 von der Spaltströmung 10 abzutrennen und somit die Lärmabstrahlung zu vermindern. Mit anderen Worten, Zustand 1 entspricht einem aerodynamisch inaktiven Zustand, der das Einfahren des Vorflügels 1 zum Hauptflügel 2 ermöglicht und Zustand 2 entspricht einem aerodynamisch aktiven Zustand, d.h. hier ist eine aerodynamische Kontur zur Verminderung der lärmverursachendeh Wirbelbildung gegeben.

Die Konturfindung der Trennflächen 7 ergibt sich aus den in Figur 3 schematisch dargestellten vier bekannten Eulerschen Knickfälle. Figur 3 zeigt diese mit den Randbedingungen eingespannt/frei (Fall 1), gelenkig/gelenkig (Fall 2), eingespannt/gelenkig (Fall 3) und eingespannt/eingespannt (Fall 4). Jeder dieser Fälle ist bei der vorliegenden Erfindung prinzipiell anwendbar.

In Figur 2 ist die Trennfläche 7 beidseitig über die Gelenke 21, 22 drehbar beweglich gelagert , so dass die Trennfläche 7 zwei stabile Knickzustände entsprechend Fall 2 der vier Eulerschen Knickfälle einnehmen kann. Das heißt, die Trennfläche 7 kann durch Betätigung der Aktuatoreinrichtung 4 zwischen den beiden in Figur 2 gezeigten stabilen Zuständen 1 und 2 "umschnappen", was umgangssprachlich auch als "Knack-Frosch-Prinzip" bezeichnet wird. Durch Betätigung der Aktuatoreinrichtung 4 wird folglich die Trennfläche 7 von einem stabilen Zustand in den anderen stabilen Zustand "geschaltet". Für das Verweilen im jeweiligen stabilen Zustand ist keine Aktuatorbetätigung erforderlich. Dadurch ist nicht nur die Steuerung der Aktuatoreinrichtung vereinfacht sondern im Fall eines elektrisch angetriebenen Aktuator kann auch Strom eingespart werden. Zudem kann eine ausgefahrene, d.h. sich im stabilen Zustand 2 befindende Trennfläche 7 mit elastischen Struktureigenschaften auch automatisch beim Einfahren des Vorflügels 1 in den Zustand 1 durch Berührung mit dem Hauptflügel 2 umschnappen. Dadurch ist die Ausfallsicherheit auf technisch einfache Weise gewährleistet, so dass im Notfall das Einfahren des Vorflügels 1 nicht durch die Trennfläche 7 behindert wird.

Zweckmäßigerweise besteht die bi-stabile Trennfläche 7 aus einem biegeweichen Flächenmaterial. Dabei sind die Abmessung der Trennfläche 7 zwischen den in Spannweitenrichtung verlaufenden Linien, entlang derer die Trennfläche 7 an den Gelenken 21, 22 gelagert ist, vorzugsweise größer als der gegenseitige Abstand dieser Linien. Außerdem ist es vorteilhaft, das die Kontur der Trennfläche 7 in zarückgezögener Position (Zustand 1) im wesentlichen der Kontur der Hohlkehle 8 entspricht.

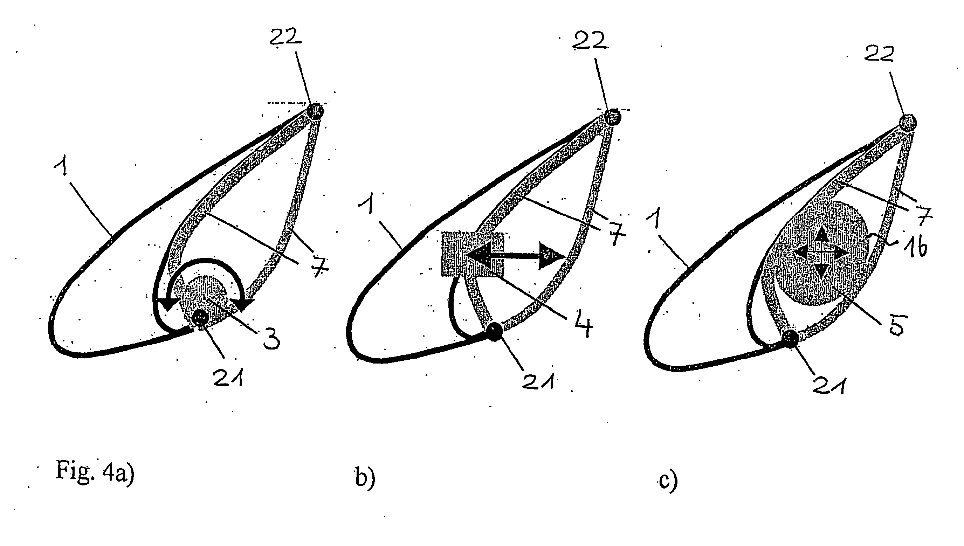

In Figur 4 sind drei mögliche Arten der Betätigung der Trennfläche 7 mittels Aktuatoreinrichtungen 3, 4 bzw. 5 dargestellt.

Bei dem Ausführungsbeispiel gemäß Figur 4a) ist die Aktuatoreinrichtung 3 ein Drehaktuator, der an einer Seite, an der die Trennfläche 7 am Gelenk 21 gelagert ist, zur Betätigung der Trennfläche 7 mit dieser gekoppelt. Durch Drehung des Drehaktuators 3 in den beiden durch Pfeile gekennzeichneten Richtungen kann die Trennfläche 7 vom Zustand 1 in den Zustand 2 gebracht werden und umgekehrt. Der Aktuator ist in diesem Fall doppelt wirkend, da er Kraftwirkungen in verschiedenen Richtungen hervorruft.

In Figur 4b) ist die Aktuatoreinrichtung 4 ein Linearaktuator, der mit der Trennfläche 7 so gekoppelt ist, dass sie, wie durch die beiden Pfeile gekennzeichnet, von dem einen stabilen Zustand 1 in den anderen stabilen Zustand 2 verlagerbar ist und umgekehrt.

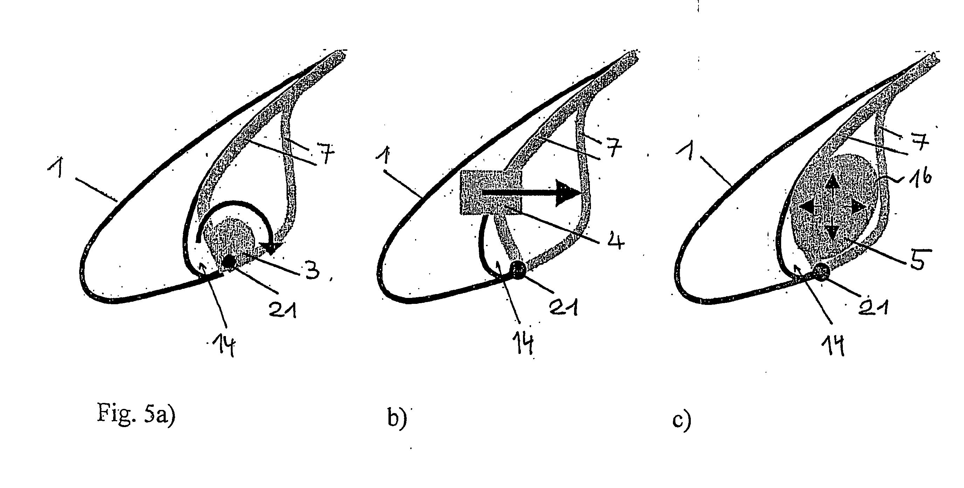

In Figur 4c) ist die Aktuatoreinrichtung 5 pneumatisch oder hydraulisch betätigt mittels eines Fluids, mit dem ein Verdrängungskörper 16 vergrößert oder verkleinert werden kann, wie durch die Pfeile gezeigt. Auch hierdurch kann die Trennfläche 7 zwischen den beiden stabilen Zuständen 1 und 2 verlagert werden. Figur 5 zeigt ein weiteres Ausführungsbeispiel einer Vorrichtung zur Minderung des aerodynamischen Lärms am Vorflügel, 1 eines Flugzeugs mit jeweils unterschiedlichen Aktuatoreinrichtungen, wobei eine mono-stabile (n = 1) Trennfläche 7 zum Einsatz kommt. Hier ist die Trennfläche 7 am unteren Ende der Profilwölbung 14 mittels eines ersten Gelenks 21 entlang einer in Spannweitenrichtung verlaufenden Linie gelagert, während sie an ihrer andere Seite am oberen Ende der Profilwölbung 14 entlang einer in Flügelrichtung verlaufenden Linie fest eingespannt ist. Hierdurch ergibt sich eine mono-stabile (n = 1) Anordnung der Trennfläche 7 ähnlich dem in Figur 3 gezeigten dritten Eulerschen Knickfall. Die Trennfläche 7 nimmt selbständig einen stabilen Zustand ein, in dem sie sich in einer aus dem Spaltbereich 9 in die Profilwölbung 14 zurückgezogenen Position befindet, so dass ein Einfahren des Vorflügels 1 an den Hauptflügel (in Figur 5 nicht dargestellt) möglich ist. Ist der Spaltbereich 9 durch Ausfahren des Vorflügels 1 freigegeben, kann die Trennfläche 7 durch Betätigung der Aktuatoreinrichtung 3, 4 bzw. 5 in eine vorgeschobene Position gebracht werden, in welcher sie das Wirbelstromgebiet 12 (vergleiche Figur 1) abtrennt bzw. einnimmt. Dabei wird die Trennfläche 7 solange in dieser vorgeschobenen Position gehalten wie die Aktuatoreinrichtung 3, 4 bzw. 5 aktiv ist. Endet die Betätigung der Aktuatoreinrichtung 3, 4 bzw. 5 oder fällt die Aktuatoreinrichtung 3, 4 bzw. 5 aus, geht die Trennfläche 7 automatisch in ihren stabilen Zustand, d.h. in die zurückgezogene Position zurück. Dadurch wird auf sehr einfache Weise ein zuverlässiges Ausfallverhalten erreicht, so dass bei einem Notfall das Einfahren des Vorflügels sicher gestellt ist. Zu diesem Zweck weist die Trennfläche 7 federnd elastische Struktureigenschaften auf, was z.B. durch ein flexibles, biegeweiches Flächenmaterial erzielt wird. Zusätzlich oder alternativ können auch getrennte Einrichtungen (nicht dargestellt) vorgesehen sein, insbesondere eine Federeinrichtung, um ein selbständiges Einstellen des stabilen Zustands zu bewirken.

Die Aktuatoreinrichtung kann wiederum ein Drehaktuator sein, Figur 5a), der im Bereich des Gelenks 21 mit der Trennfläche 7 gekoppelt ist. Bei dem in Figur 5b) gezeigten Ausführungsbeispiel ist die Aktuatoreinrichtung 4 ein Linearaktuator, der mit der Trennfläche 7 derart gekoppelt ist, dass diese bei Betätigung des Linearaktuators 4 von ihrem zurückgezogenen stabilen Zustand in den vorgeschobenen Zustand verlagert wird. Bei dem Ausführungsbeispiel der Figur 5c) schließlich ist die Aktuatoreinrichtung 5 ein hydraulischer oder pneumatischer Fluidaktuator, der durch einen im Wirbelströmungsgebiet 12 (siehe Figur 1) angeordneten Verdrängungskörper 16 gebildet ist. Durch Vergrößerung des Verdrängungskörpers mittels in diesen einströmenden Fluids wird die Trennfläche 7 aus der zurückgezogenen Position in die vorgeschobene Position gebracht.

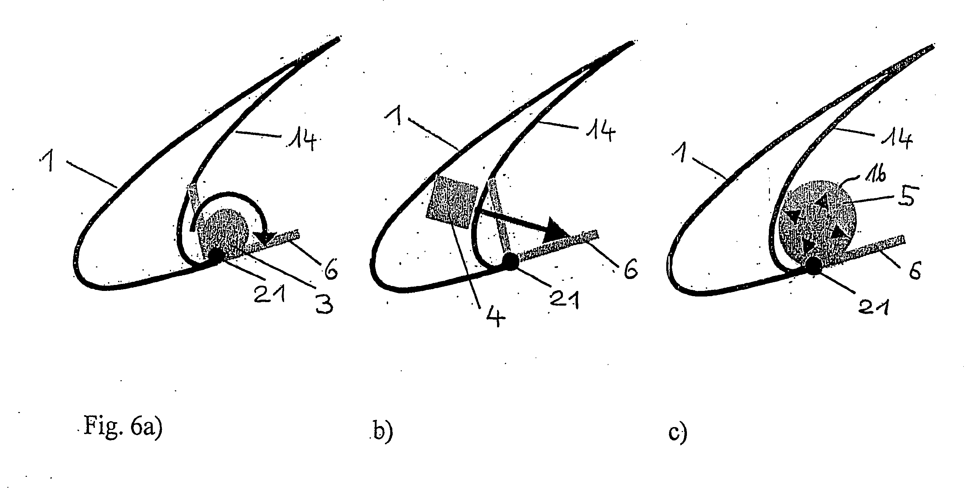

Figur 6 zeigt ein weiteres Ausführungsbeispiel einer Vorrichtung zur Minderung des aerodynamischen Lärms eines Vorflügels 1 mit jeweils unterschiedlichen Aktuatoreinrichtungen, wobei eine Trennfläche 6 vorgesehen ist, die sich nur teilweise entlang der Trennstromlinie 13 zwischen dem Wirbelströmungsgebiet 12 und der Spaltströmung 10 (siehe Figur 1) erstreckt. Die Trennfläche 6 ist wiederum mono-stabil (n =1) ausgebildet, so dass sie selbständig einen stabilen Zustand einnimmt, bei dem sie aus dem Spaltbereich 9 in die Profilwölbung 14 zurückgezogen ist, so dass der Vorflügel 1 unter Schließen des Spaltbereichs 9 an den Hauptflügel 2 einfahrbar ist. Mittels Aktuatoreinrichtung 3, 4 bzw. 5 kann die Trennfläche 6 in eine vorgeschobenen Position gebracht werden, in der sie das Wirbelströmungsgebiet 12 teilweise von der Spaltströmung 10 abtrennt. Nach dem Ende der Betätigung der Aktuatoreinrichtung 3, 4 bzw. 5 kehrt die Trennfläche 6 selbstständig, beispielsweise durch Einwirkung einer in Figur 6 nicht dargestellten Feder, in ihren stabilen Zustand, d.h. in die zurückgezogene Position zurück. Als Aktuatoreinrichtungen können wiederum ein Drehaktuator 3, Figur 6a), ein Linearaktuator 4, Figur 6b), bzw. ein fluidischer, d.h. pneumatischer oder hydraulischer Aktuator, Figur 6c), zum Einsatz kommen.

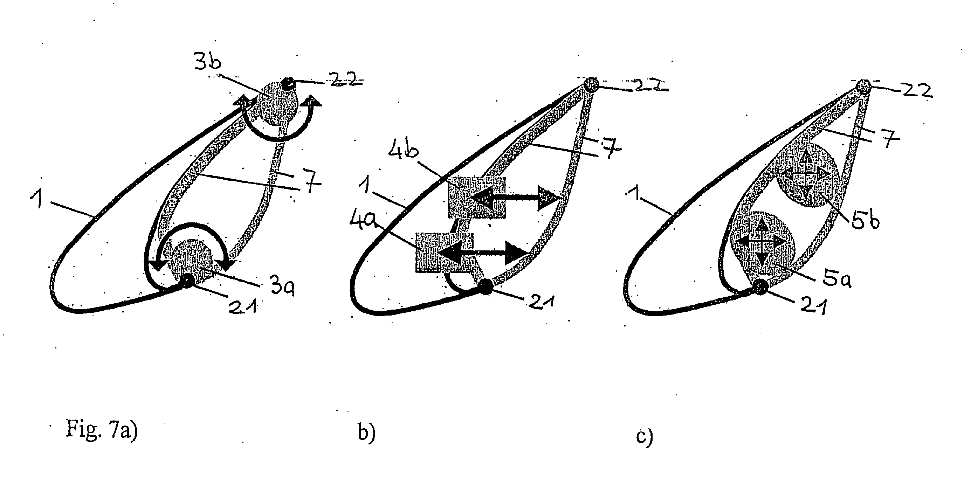

In Figur 7 sind drei weitere Ausführungsbeispiele dargestellt, welche hinsichtlich der Ausbildung der Trennfläche 7 den in Figur 4 dargestellten Ausführungsbeispielen entsprechen. Es handelt sich also um eine bi-stabil gelagerte Trennfläche 7, die wie im Zusammenhang mit Figur 4 erläutert, zwischen den zwei stabilen Zuständen 1 und 2 verlagerbar ist.

Wie dargestellt, sind die Aktuatoreinrichtungen jeweils doppelt redundant ausgebildet.

Bei dem Ausführungsbeispiel von Figur 7a) sind zwei Drehaktuatoren 3a, 3b vorgesehen, die an beiden Seite der Trennfläche 7 im Bereich der Gelenke 21 bzw. 22 mit der Trennfläche 7 zu deren Verlagerung zwischen den beiden stabilen Zuständen 1 und 2 gekoppelt sind.

Bei dem Ausführungsbeispiel von Figur 7b) sind zwei parallel geschaltete Linearaktuatoren 4a, 4b vorgesehen, die mit der Trennfläche 7 zur Verlagerung derselben zwischen den beiden stabilen Zuständen 1 und 2 gekoppelt sind.

Bei dem Ausführungsbeispiel von Figur 7c) sind zwei fluidische, also hydraulisch oder pneumatisch wirkende Aktuatoren 5a, 5b vorgesehen, die bei ihrer Betätigung die Trennfläche 7 zwischen dem stabilen Zustand 1 und dem stabilen Zustand 2 verlagern.

Bei allen beschriebenen Ausführungsbeispielen können die Drehaktuatoren 3; 3a, 3b und die Linearaktuatoren 4; 4a, 4b durch Stellmotoren oder durch Elektromagneten angetrieben sein oder pneumatisch oder hydraulisch betätigt sein.

Gemäß einer weiteren, in den Figuren nicht dargestellten Alternative kann die Aktuatoreinrichtung für eine mono-stabile, bi-stabile oder n (n ≥ 3) stabile Trennfläche auch in Form eines Seils, entsprechender Hebel oder Mitnahmestifte ausgebildet sein, die gegebenenfalls kinematisch mit einer Betätigungseinrichtung (engl, "slat track" oder "flap track) zum Einfahren bzw. Ausfahren des Zusatzflügels gekoppelt sind. Derartige Betätigungseinrichtungen sind üblicherweise fest mit dem Zusatzflügel verbunden und im Hauptflügel beweglich gelagert. Durch eine entsprechende Kopplung kann ein besonders einfacher Aktuatormechanismus erzielt werden.

In den voranstehend beschriebenen Ausführungsbeispielen ist neben einer mono-stabilen und bi-stabilen Ausbildung der Trennfläche 6; 7 auch eine n-stabile (n ≥ 3) Ausgestaltung möglich, bei der die Trennfläche 6; 7 n (n ≥ 3) stabile Zustände einnehmen kann, zwischen denen sie durch Betätigung der Aktuatoreinrichtungen 3; 3a, 3b; 4; 4a, 4b bzw. 5; 5a, 5b verlagerbar ist. Dabei nimmt die n-stabile Trennfläche 6; 7 in mindestens einem ihrer stabilen Zustände eine aus dem Spaltbereich 9 zurückgezogene Position ein, bei der der Zusatzflügel 1 unter Schließen des Spaltbereichs 9 an den Hauptflügel 2 einfahrbar ist, und wobei die n-stabile Trennfläche 6; 7 bei durch Ausfahren des Zusatzflügels 1 frei gegebenen Spaltbereich 9 in mindestens einem ihrer anderen stabilen Zustände eine vorgeschobene Position einnimmt, in welcher sie das Wirbelströmungsgebiet 12 zumindest teilweise von der Spaltströmung 10 abtrennt oder deren Raum einnimmt.

Die stabilen Zustände der Trennfläche 6; 7 können durch die strukturellen Eigenschaften des die Trennfläche 6; 7 bildenden Flächenmaterials und/oder durch zusätzlich vorgesehene, mit der Trennfläche 6; 7 gekoppelte Einrichtungen, z.B. Federeinrichtungen gebildet sein. Alternativ können auch zusätzlich vorgesehene fluidisch, also hydraulisch oder pneumatisch betätigte Einrichtungen vorgesehen sein, durch welche die Trennfläche 6; 7 in den jeweiligen stabilen Zuständen gehalten wird. Bei einer bi-stabilen oder n (n ≥ 3) stabilen Trennfläche bietet sich zudem ein Rastermechanismus ähnlich dem einer Fahrradschaltung an, um zwischen den stabilen Zuständen zu "schalten".

Die einseitig gelagerte Trennfläche 6 gemäß dem Ausführungsbeispiel in Figur 6 kann, im Falle einer einseitigen drehbaren Lagerung durch ein starres Flächenmaterial, also im wesentlichen eine Platte, gebildet sein oder durch ein biegeweiches Flächenmaterial. Im Falle einer beiderseitig gelagerten Trennfläche 7, welche durch "Umschnappen" zwischen den einzelnen stabilen Zuständen verlagert wird, ist die Trennfläche 7 durch ein biegeweiches Flächenmaterial gebildet. Das Flächenmaterial der Trennfläche 6; 7 kann ein Metallblech, ein glasfaserverstärkter Kunststoff (GFK), ein karbonfaserverstärkter Kunststoff (CFK), ein faserverstärktes Polymer oder ein faserverstärktes Elastomer sein, sowohl im Falle eines starren Flächenmaterials als auch im Falle eines biegeweichen Flächenmaterials.

In den Figuren wurden Ausführungsbeispiele erläutert, bei denen die Vorrichtung zur Minderung des aerodynamischen Lärms an einem Vorflügel 1 verwirklicht wurde. Die entsprechenden Maßnahmen können jedoch auch dann umgesetzt werden, wenn der Zusatzflügel eine Landeklappe 11 ist. In diesem Falle ist die Profilwölbung 14, in welcher die Trennfläche 6; 7 vorgesehen ist, an der Rückseite des Hauptflügels 2 angeordnet.

### Bezugszeichenliste

- 1: Zusatzflügel (Vorflügel)
- 2: Hauptflügel 3; 3a; 3b Aktuatoreinrichtung
- 4; 4a; 4b: Aktuatoreinrichtung
- 5; 5a; 5b: Aktuatoreinrichtung
- 6: Trennfläche
- 7: Trennfläche
- 8: Hohlkehle
- 9: Spaltbereich
- 10: Spaltströmung
- 11: Zusatzflügel (Landeklappe)
- 12: Wirbelströmungsgebiet
- 13: Trennstromlinie
- 14: Profilwölbung
- 15: äußere Beplankung
- 16: Verdrängungskörper
- 18: Hauptflügelvorderkante
- 21: Gelenk
- 22: Gelenk

## Patentansprüche

1. Hauptflügel- / Zusatzflügel- Anordnung für Flugzeuge
wobei der Zusatzflügel (1;11) an dem Hauptflügel (2) angelenkt und unter Freigabe eines Spaltbereichs (9) zwischen dem Hauptflügel (2) und dem Zusatzflügel (1; 11) ausfahrbar ist,
mit einer Vorrichtung zur Minderung aerodynamischen Lärms bestehend aus einer Aktuatoreinrichtung (3;3a,3b;4;4a,4b;5;5a,5b) und eine Trennfläche (6; 7), wobei die Trennfläche (6;7) bei ausgefahrenem Zusatrflügel (1; 11) in eine vorgeschobene Position in den Spaltbereich (9) verlagerbar ist in welcher sie entweder ein Wirbelströmungsgebiet (12) zumindest teilweise von einer Spaltströmung (10) der im Spaltbereich (9) zwischen Zusatzflügel (1; 11) und Hauptflügel (2) strömenden Luft abgetrennt, oder den Raum der Spaltströmung (10) einnimmt,
wobei die Trennfläche (6; 7) ein starres oder biegewelches Flächenmaterial ist, welches in der Lage ist eine Anzahl n (n=1, 2, 3, 4, 5, .... 10) von stabilen Zuständen einzunehmen;
wobei die Trennfläche (6; 7) in ihrem jeweiligen stabilen Zustand ohne Aktuatoreinwirkung oder ohne Einwirkung von Stellkräften verteilt;
wobei die Trennfläche (6; 7) durch Betätigung der Aktuatoreinrichtung (3; 3a, 3b; 4; 4a, 4b: 5; 5a, 5b) zwischen mindestens einem der stabilen Zustände und mindestens einem weiteren Zustand verlagerbar ist,
**dadurch gekennzeichnet, dass**
die Trennfläche (6; 7) zur Ausfallsicherheit aus einer vorgeschobenen Position nach Ende die Bestätigung der Aktuatoreinrichtung (3;3a,3b;4;4a,4b;5;5a,5b) oder bei Ausfall der Aktuatoreinrichtung (3; 3a, 3b; 4; 4a, 4b; 5; 5a, 5b) oder beim Noteinfahren des Zusatzflügels (1; 11) automatisch in einen stabilen Zustand, in dem die Trennfläche (6; 7) eine aus dem Spaltbereich (9) zurückgezogene Stellung einnimmt, kehrt.

2. Anordnung nach Anspruch 1, **dadurch gekennzeichnet, dass** die Trennfläche (6; 7) eine mono-stabile (n = 1) Fläche ist, die selbständig einen stabilen Zustand einnimmt, aus dem sie durch Betätigung der Aktuatoreinrichtung (3; 3a, 3b; 4; 4a, 4b; 5; 5a, 5b) verlagerbar ist.

3. Anordnung nach Anspruch 2, **dadurch gekennzeichnet, dass** die mono-stabile Trennfläche (6; 7) in ihrem stabilen Zustand eine aus dem Spaltbereich (9) zurückgezogene Position einnimmt, bei der der Zusatzflügel (1; 11) unter Schließen des Spaltbereichs (9) an den Haupftlügel (2) einfahrbar ist, und dass die mono-stabile Trennfläche (6; 7) bei durch Ausfahren des Zusatzflügels (1; 11) freigegebenem Spaltbereich (9) durch Betätigung der Aktuatoreinrichtung (3; 3a, 3b; 4; 4a, 4b; 5; 5a, 5b) eine vorgeschobene Position einnimmt, in welcher sie das Wirbelströmungsgebiet (12) zumindest teilweise von der Spaltströmung (10) abtrennt oder deren Raum einnimmt.

4. Anordnung nach einem der Ansprüche 1 bis 3, **dadurch gekennzeichnet, dass** sich der stabile Zustand der mono-stabilen Trennfläche (6; 7) durch federnd elastische Struktureigenschaften der Trennfläche (6; 7) und/oder durch getrennte Einrichtungen, insbesondere eine Federeinrichtung, selbständig einstellt.

5. Anordnung nach Anspruch 1, **dadurch gekennzeichnet, dass** die Trennfläche (6; 7) eine bi-stabile (n = 2) Fläche ist, die zwei stabile Zustände aufweist, zwischen denen sie durch Betätigung der Aktuatoreinrichtung (3; 3a, 3b; 4; 4a, 4b; 5; 5a, 5b) verlagerbar ist.

6. Anordnung nach Anspruch 5, **dadurch gekennzeichnet, dass** die bi-stabile Trennfläche, (6; 7) in ihrem einen stabilen Zustand eine aus dem Spaltbereich (9) zurückgezogene Position einnimmt, bei der der Zusatzflügel (1; 11) unter Schließen des Spaltbereichs (9) an den Hauptflügel (2) einfahrbar ist, und dass die bi-stabile Trennfläche (6; 7) bei durch Ausfahren des Zusatzflügels (1; 11) freigegebenem Spaltbereich (9) in ihrem anderen stabilen Zustand eine vorgeschobene Position einnimmt, in welcher sie das Wirbelströmungsgebiet (12) zumindest teilweise von der Spaltströmung (10) abtrennt oder deren Raum einnimmt.

7. Anordnung nach Anspruch 5 oder 6, **dadurch gekennzeichnet, dass** sich die stabilen Zustände der bi-stabilen Trennfläche (6; 7) durch federnd elastische Struktureigenschaften der Trennfläche (6; 7), durch Rastereinrichtungen und/oder durch getrennte Einrichtungen, insbesondere eine Federeinrichtung, selbständig einstellen.

8. Anordnung nach Anspruch 1, **dadurch gekennzeichnet, dass** die Trennfläche (6; 7) eine n-stabile (n ≥ 3, 4, 5 ... 10) Fläche ist, die in der Lage ist eine Anzahl n (n ≥ 3, 4, 5 ... 10) von stabilen Zuständen einzunehmen, zwischen denen sie durch Betätigung der Aktuatoreinrichtung (3; 3a, 3b; 4; 4a, 4b; 5; 5a, 5b) verlagerbar ist.

9. Anordnung nach Anspruch 8, **dadurch gekennzeichnet, dass** die n-stabile Trennfläche (6; 7) in mindestens einem ihrer stabilen Zustände eine aus dem Spaltbereich (9) zurückgezogene Position einnimmt, bei der der Zusatzflügel (1; 11) unter Schließen des Spaltbereichs (9) an den Hauptflügel (2) einfahrbar ist, und dass die n-stabile Trennfläche (6: 7) bei durch Ausfahren des Zusatzflügels (1; 11) freigegebenem Spaltbereich (9) in mindestens einem ihrer anderen stabilen Zustände eine vorgeschobene Position einnimmt, in welcher sie das Wirbelströmungsgeblet (12) zumindest teilweise von der Spaltströmung (10) abtrennt oder deren Raum einnimmt.

10. Anordnung nach einem der Ansprüche 8 und 9, **dadurch gekennzeichnet, dass** sich die stabilen Zustände der n-stabilen Trennfläche (6; 7) durch Rastereinrichtungen und/oder durch getrennte Einrichtungen, insbesondere eine Federeinrichtung, selbständig einstellen.

11. Anordnung nach einem der Ansprüche 1 bis 10, **dadurch gekennzeichnet, dass** die Trennfläche (6; 7) eine das Wirbelströmungsgebiet, (12) zumindest teilweise abdeckende Fläche ist und entlang einer in Spannweitenrichtung verlaufenden Linie zumindest einseitig gelenkig gelagert oder zumindest einseitig fest eingespannt ist.

12. Anordnung nach einem der Ansprüche 1 bis 10, **dadurch gekennzeichnet, dass** die Trennfläche (7) eine das Wirbelströmungsgebiet (12) teilweise oder ganz abdeckende Fläche ist und beidseitig entlang in Spannweitenrichtung verlaufender Linien gelagert ist.

13. Anordnung nach Anspruch 12, **dadurch gekennzeichnet, dass** die Abmessung der Trennfläche (7) zwischen den in Spannweitenrichtung verlaufenden Linien, entlang derer die Trennfläche (7) gelagert ist, größer als der gegenseitige Abstand dieser Linien ist.

14. Anordnung nach Anspruch 12 oder 13, **dadurch gekennzeichnet, dass** die Trennfläche (7) an beiden Seiten entlang der in Spannweitenrichtung verlaufenden Linien gelenkig gelagert ist.

15. Anordnung nach Anspruch 12 oder 13, **dadurch gekennzeichnet, dass** die Trennfläche (7) an einer Seite fest eingespannt und an der anderen Seite entlang einer in Spannweitenrichtung verlaufenden Linie gelenkig gelagert ist.

16. Anordnung nach Anspruch 12 oder 13, **dadurch gekennzeichnet, dass** die Trennfläche (7) an beiden Seiten entlang der in Spannweitenrichtung verlaufenden Linien fest eingespannt ist.

17. Anordnung nach einem der Ansprüche 1 bis 16, **dadurch gekennzeichnet, dass** die Trennfläche (6; 7) durch ein biegeweiches Flächenmaterial gebildet ist.

18. Anordnung nach Anspruch 17, **dadurch gekennzeichnet, dass** das Flächenmaterial ein biegeweiches Metallblech, ein glasfaserverstärkter Kunststoff (GFK), ein kohlefaserverstärkter Kunststoff (CFK), ein faserverstärktes Polymer oder ein faserverstärktes Elastomer ist.

19. Anordnung nach einem der Ansprüche 1 bis 18, **dadurch gekennzeichnet, dass** die Aktuatoreinrichtung (3; 3a, 3b) ein Drehaktuator ist, der an mindestens einer Seite, an der die Trennfläche (6; 7) entlang einer in Spannweitenrichtung verlaufenden Linie gelagert ist, zur Verlagerung der Trennfläche (6; 7) zwischen dem mindestens einen stabilen Zustand und dem mindestens einen weiteren Zustand mit dieser gekoppelt ist.

20. Anordnung nach einem der Ansprüche 1 bis 18 **dadurch gekennzeichnet, dass** die Aktuatoreinrichtung (4; 4a, 4b) ein Linearaktuator ist, der mit der Trennfläche (6; 7) zur Verlagerung derselben zwischen dem mindestens einen stabilen Zustand und dem mindestens einen weiteren Zustand gekoppelt ist.

21. Anordnung nach einem der Ansprüche 1 bis 18, **dadurch gekennzeichnet, dass** die Aktuatoreinrichtung (5; 5a; 5b) ein Fluidaktuator ist, der mit der Trennfläche (6; 7) zur Verschiebung derselben zwischen dem mindestens einen stabilen Zustand und dem mindestens einen weiteren Zustand gekoppelt ist, wobei der Fluidaktuator einen fluidbeaufschlagbaren Verdrängungskörper (16) umfasst, der im Wirbelströmungsgebiet (12) angeordnet ist.

22. Anordnung nach Anspruch 19 oder 20, **dadurch gekennzeichnet, dass** die Aktuatoreinrichtung (3; 3a, 3b; 4; 4a, 4b) durch Stellmotor, Elektromotor oder Elektromagnet angetrieben ist.

23. Anordnung nach einem der Ansprüche 19 bis 20, **dadurch gekennzeichnet, dass** die Aktuatoreinrichtung (3; 3a, 3b; 4; 4a, 4b; 5; 5a, 5b) ein pneumatischer oder hydraulischer Aktuator ist.

24. Anordnung nach einem der Ansprüche 1 bis 18, **dadurch gekennzeichnet, dass** die Aktuatoreinrichtung als Seil, Hebel oder Mitnahmestifte ausgebildet ist.

25. Anordnung nach Anspruch 24, **dadurch gekennzeichnet, dass** das Seil, die Hebel oder die Mitnahmestifte mit einer Betätigungseinrichtung zum Ein- und Ausfahren der Zusatzflügel (1; 11) gekoppelt sind.

26. Anordnung nach einem der Ansprüche 1 bis 25, **dadurch gekennzeichnet, dass** die Aktuatoreinrichtung (3a, 3b; 4a, 4b; 5a, 5b) doppelt oder einfach wirkend ausgebildet ist.

27. Anordnung nach einem der Ansprüche 1 bis 25, **dadurch gekennzeichnet, dass** die Aktuatoreinrichtung (3a, 3b; 4a, 4b; 5a, 5b) doppelt oder mehrfach redundant ausgebildet ist.

28. Anordnung nach einem der Ansprüche 1 bis 27, **dadurch gekennzeichnet, dass** an der Rückseite des Flügels (1; 2), an dem die Trennfläche (6; 7) angebracht ist, eine Hohlkehle (8) ausgebildet ist, in welche die Trennfläche (6; 7) in eine aus dem Spaltbereich (9) zurückgezogene Position verlagerbar ist, bei der der Zusatzflügel (1; 11) unter Schließen des Spaltbereichs (9) an den Hauptflügel (2) einfahrbar ist.

29. Anordnung nach Anspruch 28, **dadurch gekennzeichnet, dass** die Kontur der Trennfläche (6; 7) in zurückgezogener Position im Wesentlichen an die Kontur der Hohlkehle (8) angepasst ist.

30. Anordnung nach einem der Ansprüche 1 bis 29, **dadurch gekennzeichnet dass** der Zusatzflügel ein Vorflügel (1) oder eine Landeklappe (11) ist.

## Claims

1. Mainplane/additional wing arrangement for aircraft wherein the additional wing (1; 11) is articulated on the mainplane (2) and can be extended opening a slot area (9) between the mainplane (2) and the additional wing (1; 11),
having an apparatus for reducing aerodynamic noise, consisting of an actuator device (3; 3a, 3b; 4; 4a, 4b; 5; 5a, 5b) and a separating surface (6; 7), wherein the separating surface (6; 7) can be moved to a pushed-forward position into the slot area (9) when the additional wing (1; 11) is extended, and in which it separates either a vortex flow region (12) at least partially from a slot flow (10) of the air flowing in the slot area (9) between the additional wing (1; 11) and the mainplane (2) or occupies the space of the slot flow (10),
wherein the separating surface (6; 7) is a rigid or easily bent flat material which can assume a number n (n = 1, 2, 3, 4, 5, ... 10) of stable states;
wherein the separating surface (6; 7) remains in its respective stable state without any actuator influence or without the influence of actuating forces;
wherein the separating surface (6; 7) can be moved by operation of the actuator device (3; 3a, 3b; 4; 4a, 4b; 5; 5a, 5b) between at least one of the stable states and at least one further state,
**characterized in that**
the separating surface (6; 7) returns, for fail-safety, from a pushed-forward position after the end of the operation of the actuator device (3; 3a, 3b; 4; 4a, 4b; 5; 5a, 5b) or in the event of failure of the actuator device (3; 3a, 3b; 4; 4a, 4b; 5; 5a, 5b) or in the event of emergency retraction of the additional wing (1; 11) automatically to a stable state in which the separating surface (6; 7) assumes a position in which it is pulled back out of the slot area (9).

2. Arrangement according to Claim 1, **characterized in that** the separating surface (6; 7) is a monostable (n = 1) surface which automatically assumes a stable state from which it can be moved by operation of the actuator device (3; 3a, 3b; 4; 4a, 4b; 5; 5a, 5b).

3. Arrangement according to Claim 2, **characterized in that**, in its stable state, the monostable separating surface (6; 7) assumes a position in which it is pulled back out of the slot area (9) and in which the additional wing (1; 11) can be retracted, with the slot area (9) to the mainplane (2) being closed, and **in that** the monostable separating surface (6; 7) assumes a pushed-forward position when the slot area (9) is opened by extension of the additional wing (1; 11) by operation of the actuator device (3; 3a, 3b; 4; 4a, 4b; 5; 5a, 5b), in which pushed-forward position it at least partially separates the vortex flow region (12) from the slot flow (10), or occupies its space.

4. Arrangement according to one of Claims 1 to 3, **characterized in that** the stable state of the monostable separating surface (6; 7) is set automatically by resiliently elastic structural characteristics of the separating surface (6; 7) and/or by separate devices, in particular a spring device.

5. Arrangement according to Claim 1, **characterized in that** the separating surface (6; 7) is a bistable (n = 2) surface, which has two stable states between which it can be moved by operation of the actuator device (3; 3a, 3b; 4; 4a, 4b; 5; 5a, 5b).

6. Arrangement according to Claim 5, **characterized in that**, in one of its stable states, the bistable separating surface (6; 7) assumes a position in which it is pulled back out of the slot area (9) and in which the additional wing (1; 11) can be retracted with the slot area (9) to the mainplane (2) being closed, and **in that**, in its other stable state, the bistable separating surface (6; 7) assumes a pushed-forward position when the slot area (9) is opened by extension of the additional wing (1; 11), in which pushed-forward position it at least partially separates the vortex flow region (12) from the slot flow (10), or occupies its space.

7. Arrangement according to Claim 5 or 6, **characterized in that** the stable states of the bistable separating surface (6; 7) are set automatically by resiliently elastic structural characteristics of the separating surface (6; 7), by grid devices and/or by separate devices, in particular a spring device.

8. Arrangement according to Claim 1, **characterized in that** the separating surface (6; 7) is an n-stable (n ≥ 3, 4, 5 ... 10) surface, which can assume a number n (n ≥ 3, 4, 5 ... 10) of stable states, between which it can be moved by operation of the actuator device (3; 3a, 3b; 4; 4a, 4b; 5; 5a, 5b).

9. Arrangement according to Claim 8, **characterized in that**, in at least one of its stable states, the n-stable separating surface (6; 7) assumes a position in which it is pulled back out of the slot area (9), in which position the additional wing (1; 11) can be retracted with the slot area (9) to the mainplane (2) being closed, and **in that**, in at least one of its other stable states, the n-stable separating surface (6; 7) assumes a pushed-forward position when the slot area (9) is opened by extension of the additional wing (1; 11), in which pushed-forward position it at least partially separates the vortex flow region (12) from the slot flow (10), or occupies its space.

10. Arrangement according to one of Claims 8 and 9, **characterized in that** the stable states of the n-stable separating surface (6; 7) are set automatically by grid devices and/or by separate devices, in particular a spring device.

11. Arrangement according to one of Claims 1 to 10, **characterized in that** the separating surface (6; 7) is a surface which at least partially covers the vortex flow region (12) and is mounted in an articulated manner at at least one end, or is clamped in firmly at at least one end, along a line which runs in the span direction.

12. Arrangement according to one of Claims 1 to 10, **characterized in that** the separating surface (7) is a surface which partially or entirely covers the vortex flow region (12) and is mounted on both sides along lines which run in the span direction.

13. Arrangement according to Claim 12, **characterized in that** the size of the separating surface (7) between the lines which run in the span direction and along which the separating surface (7) is mounted is greater than the distance between these lines.

14. Arrangement according to Claim 12 or 13, **characterized in that** the separating surface (7) is mounted in an articulated manner on both sides along the lines which run in the span direction.

15. Arrangement according to Claim 12 or 13, **characterized in that** the separating surface (7) is clamped in firmly on one side, and is mounted in an articulated manner on the other side along a line which runs in the span direction.

16. Arrangement according to Claim 12 or 13, **characterized in that** the separating surface (7) is clamped in firmly on both sides along the lines which run in the span direction.

17. Arrangement according to one of Claims 1 to 16, **characterized in that** the separating surface (6; 7) is formed by a flat material which can bend easily.

18. Arrangement according to Claim 17, **characterized in that** the flat material is a metal sheet which can bend easily, a glass-fibre-reinforced plastic (GFRP), a carbon-fibre-reinforced plastic (CFRP), a fibre-reinforced polymer or a fibre-reinforced elastomer.

19. Arrangement according to one of Claims 1 to 18, **characterized in that** the actuator device (3; 3a, 3b) is a rotary actuator which is coupled to the separating surface (6; 7) on at least one side, on which the separating surface (6; 7) is mounted along a line which runs in the span direction, in order to move the separating surface (6; 7) between the at least one stable state and the at least one further state.

20. Arrangement according to one of Claims 1 to 18, **characterized in that** the actuator device (4; 4a, 4b) is a linear actuator which is coupled to the separating surface (6; 7) in order to move the latter between the at least one stable state and the at least one further state.

21. Arrangement according to one of Claims 1 to 18, **characterized in that** the actuator device (5; 5a; 5b) is a fluid actuator, which is coupled to the separating surface (6; 7) in order to move the latter between the at least one stable state and the at least one further state, wherein the fluid actuator comprises a displacement body (16) to which fluid can be applied and which is arranged in the vortex flow region (12).

22. Arrangement according to Claim 19 or 20, **characterized in that** the actuator device (3; 3a, 3b; 4; 4a, 4b) is driven by an actuating motor, electric motor or electromagnet.

23. Arrangement according to one of Claims 19 to 20, **characterized in that** the actuator device (3; 3a, 3b; 4; 4a, 4b; 5; 5a, 5b) is a pneumatic or hydraulic actuator.

24. Arrangement according to one of Claims 1 to 18, **characterized in that** the actuator device is in the form of a cable, lever or driving pins.

25. Arrangement according to Claim 24, **characterized in that** the cable, the lever or the driving pins is or are coupled to an operating device for retraction and extension of the additional wings (1; 11).

26. Arrangement according to one of Claims 1 to 25, **characterized in that** the actuator device (3a, 3b; 4a, 4b; 5a, 5b) is designed to be double or single-acting.

27. Arrangement according to one of Claims 1 to 25, **characterized in that** the actuator device (3a, 3b; 4a, 4b; 5a, 5b) is designed to be double or multiple-redundant.

28. Arrangement according to one of Claims 1 to 27, **characterized in that** a hollow fillet (8) is formed on the rear face of the wing (1; 2), to which the separating surface (6; 7) is fitted, into which hollow fillet (8) the separating surface (6; 7) can be moved to a position in which it is pulled back out of the slot area (9), and in which the additional wing (1; 11) can be retracted, closing the slot area (9) to the mainplane (2).

29. Arrangement according to Claim 28, **characterized in that** the contour of the separating surface (6; 7) when in the pulled-back position is essentially matched to the contour of the hollow fillet (8).

30. Arrangement according to one of Claims 1 to 29, **characterized in that** the additional wing is a slat (1) or a landing flap (11).

## Revendications

1. Configuration d'aile principale et d'aile auxiliaire d'avion
dans laquelle l'aile auxiliaire (1; 11) est articulée sur l'aile principale (2) et est apte à sortir en libérant une région de fente (9) entre l'aile principale (2) et l'aile auxiliaire (1; 11) ;
avec un dispositif permettant de réduire le bruit aérodynamique, se composant d'un dispositif d'actionneur (3; 3a, 3b; 4; 4a, 4b; 5; 5a, 5b) et d'une face de séparation (6; 7), dans lequel, lorsque l'aile auxiliaire (1; 11) est sortie, la face de séparation (6; 7) peut être déplacée dans une position avancée dans la région de fente (9) dans laquelle soit elle sépare au moins en partie une zone d'écoulement turbulent (12) d'un écoulement de fente (10) de l'air s'écoulant dans la région de fente (9) entre l'aile auxiliaire (1; 11) et l'aile principale (2), soit elle occupe l'espace de l'écoulement de fente (10) ;
dans laquelle la face de séparation (6; 7) est un matériau plat rigide ou flexible, qui est capable d'occuper un nombre n (n = 1, 2, 3, 4, 5, ... 10) états stables ;
dans laquelle la face de séparation (6; 7) reste dans son état stable respectif en l'absence d'action de l'actionneur ou en l'absence d'action de forces de déplacement ;
dans laquelle la face de séparation (6; 7) est déplaçable entre au moins un des états stables et au moins un autre état par actionnement du dispositif d'actionneur (3; 3a, 3b; 4; 4a, 4b; 5; 5a, 5b),
**caractérisée en ce que**
la face de séparation (6; 7) revient automatiquement dans un état stable, dans lequel la face de séparation (6; 7) occupe une position retirée hors de la région de fente (9), à partir d'une position avancée pour assurer la sécurité intégrée après la fin de l'actionnement du dispositif d'actionneur (3; 3a, 3b; 4; 4a, 4b; 5; 5a, 5b), ou en cas de panne du dispositif d'actionneur (3; 3a, 3b; 4; 4a, 4b; 5; 5a, 5b) ou en cas de rentrée d'urgence de l'aile auxiliaire (1; 11).

2. Configuration selon la revendication 1, **caractérisée en ce que** la face de séparation (6; 7) est une face mono-stable (n = 1), qui occupe automatiquement un état stable à partir duquel elle est déplaçable par actionnement du dispositif d'actionneur (3; 3a, 3b; 4; 4a, 4b; 5; 5a, 5b).

3. Configuration selon la revendication 2, **caractérisée en ce que** la face de séparation mono-stable (6; 7) occupe, dans son état stable, une position retirée hors de la région de fente (9), dans laquelle l'aile auxiliaire (1; 11) peut être rentrée sur l'aile principale (2) en fermant la région de fente (9), et **en ce que** la face de séparation mono-stable (6; 7) occupe, lorsque la région de fente (9) est libérée par sortie de l'aile auxiliaire (1; 11) par actionnement du dispositif d'actionneur (3; 3a, 3b; 4; 4a, 4b; 5; 5a, 5b), une position avancée dans laquelle elle sépare au moins en partie la zone d'écoulement turbulent (12) de l'écoulement de fente (10) ou elle occupe l'espace de celui-ci.

4. Configuration selon l'une quelconque des revendications 1 à 3, **caractérisée en ce que** l'état stable de la face de séparation mono-stable (6; 7) s'établit automatiquement par des propriétés élastiques de la structure de la face de séparation (6; 7) et/ou par des dispositifs distincts, en particulier par un dispositif à ressort.

5. Configuration selon la revendication 1, **caractérisée en ce que** la face de séparation (6; 7) est une face bi-stable (n = 2), qui présente deux états stables, entre lesquels elle est déplaçable par actionnement du dispositif d'actionneur (3; 3a, 3b; 4; 4a, 4b; 5; 5a, 5b).

6. Configuration selon la revendication 5, **caractérisée en ce que** la face de séparation bi-stable (6; 7) occupe, dans son premier état stable, une position retirée hors de la région de fente (9), dans laquelle l'aile auxiliaire (1; 11) peut être rentrée sur l'aile principale (2) en fermant la région de fente (9), et **en ce que** la face de séparation bi-stable (6; 7) occupe, dans son autre état stable lorsque la région de fente (9) est libérée par sortie de l'aile auxiliaire (1; 11), une position sortie, dans laquelle elle sépare au moins en partie la zone d'écoulement turbulent (12) de l'écoulement de fente (10) ou elle occupe l'espace de celui-ci.

7. Configuration selon la revendication 5 ou 6, **caractérisée en ce que** les états stables de la face de séparation bi-stable (6; 7) s'établissent automatiquement par des propriétés élastiques de la structure de la face de séparation (6; 7), par des dispositifs d'encliquetage et/ou par des dispositifs distincts, en particulier par un dispositif à ressort.

8. Configuration selon la revendication 1, **caractérisée en ce que** la face de séparation (6; 7) est une face multi-stable (n ≥ 3, 4, 5, ..., 10), qui est capable d'occuper un nombre n (n ≥ 3, 4, 5, ..., 10) d'états stables, entre lesquels elle est déplaçable par actionnement du dispositif d'actionneur (3; 3a, 3b; 4; 4a, 4b; 5; 5a, 5b).

9. Configuration selon la revendication 8, **caractérisée en ce que** la face de séparation multi-stable (6; 7) occupe, dans au moins un de ses états stables, une position retirée hors de la région de fente (9), dans laquelle l'aile auxiliaire (1; 11) peut être rentrée sur l'aile principale (2) en fermant la région de fente (9), et **en ce que** la face de séparation multi-stable (6; 7) occupe, dans au moins un de ses autres états stables lorsque la région de fente (9) est libérée par sortie de l'aile auxiliaire (1; 11), une position sortie, dans laquelle elle sépare au moins en partie la zone d'écoulement turbulent (12) de l'écoulement de fente (10) ou elle occupe l'espace de celui-ci.

10. Configuration selon l'une quelconque des revendications 8 et 9, **caractérisée en ce que** les états stables de la face de séparation multi-stable (6; 7) s'établissent automatiquement par des dispositifs d'encliquetage et/ou par des dispositifs distincts, en particulier par un dispositif à ressort.

11. Configuration selon l'une quelconque des revendications 1 à 10, **caractérisée en ce que** la face de séparation (6; 7) est une face recouvrant au moins en partie la zone d'écoulement turbulent (12) et est supportée de façon articulée sur au moins un côté ou est encastrée de façon fixe sur au moins un côté le long d'une ligne s'étendant dans la direction de l'envergure.

12. Configuration selon l'une quelconque des revendications 1 à 10, **caractérisée en ce que** la face de séparation (7) est une face recouvrant partiellement ou entièrement la zone d'écoulement turbulent (12) et est supportée sur les deux côtés le long de lignes s'étendant dans la direction de l'envergure.

13. Configuration selon la revendication 12, **caractérisée en ce que** la dimension de la face de séparation (7) entre les lignes s'étendant dans la direction de l'envergure, le long desquelles la face de séparation (7) est supportée, est plus grande que la distance mutuelle de ces lignes.

14. Configuration selon la revendication 12 ou 13, **caractérisée en ce que** la face de séparation (7) est supportée de façon articulée sur les deux côtés, le long des lignes s'étendant dans la direction de l'envergure.

15. Configuration selon la revendication 12 ou 13, **caractérisée en ce que** la face de séparation (7) est encastrée de façon fixe sur un côté et est supportée de façon articulée sur l'autre côté le long d'une ligne s'étendant dans la direction de l'envergure.

16. Configuration selon la revendication 12 ou 13, **caractérisée en ce que** la face de séparation (7) est encastrée de façon fixe sur les deux côtés le long de lignes s'étendant dans la direction de l'envergure.

17. Configuration selon l'une quelconque des revendications 1 à 16, **caractérisée en ce que** la face de séparation (6; 7) est formée par un matériau plat flexible.

18. Configuration selon la revendication 17, **caractérisée en ce que** le matériau plat est une tôle métallique flexible, une matière plastique renforcée par des fibres de verre (GFK), une matière plastique renforcée par des fibres de carbone (CFK), un polymère renforcé par des fibres ou un élastomère renforcé par des fibres.

19. Configuration selon l'une quelconque des revendications 1 à 18, **caractérisée en ce que** le dispositif d'actionneur (3; 3a, 3b) est un actionneur rotatif qui, sur au moins un côté, sur lequel la face de séparation (6; 7) est supportée le long d'une ligne s'étendant dans la direction de l'envergure, est couplé à la face de séparation (6; 7) en vue du déplacement de celle-ci entre ledit au moins un état stable et ledit au moins un autre état.

20. Configuration selon l'une quelconque des revendications 1 à 18, **caractérisée en ce que** le dispositif d'actionnement (4; 4a, 4b) est un actionneur linéaire, qui est couplé à la face de séparation (6; 7) en vue du déplacement de celle-ci entre ledit au moins un état stable et ledit au moins un autre état.

21. Configuration selon l'une quelconque des revendications 1 à 18, **caractérisée en ce que** le dispositif d'actionneur (5; 5a, 5b) est un actionneur fluidique qui est couplé à la face de séparation (6; 7) en vue du déplacement de celle-ci entre ledit au moins un état stable et ledit au moins un autre état, dans laquelle l'actionneur fluidique comprend un corps déplaceur (16) pouvant être exposé au fluide, qui est disposé dans la zone d'écoulement turbulent (12).

22. Configuration selon la revendication 19 ou 20, **caractérisée en ce que** le dispositif d'actionneur (3; 3a, 3b; 4; 4a, 4b) est entraîné par un moteur de commande, un moteur électrique ou un électroaimant.

23. Configuration selon l'une quelconque des revendications 19 à 20, **caractérisée en ce que** le dispositif d'actionneur (3; 3a, 3b; 4; 4a, 4b; 5; 5a, 5b) est un actionneur pneumatique ou hydraulique.

24. Configuration selon l'une quelconque des revendications 1 à 18, **caractérisée en ce que** le dispositif d'actionneur se présente sous la forme d'un câble, d'un levier ou d'une broche d'entraînement.

25. Configuration selon la revendication 24, **caractérisée en ce que** le câble, le levier ou la broche d'entraînement est couplé(e) à un dispositif d'actionnement pour la rentrée et la sortie de l'aile auxiliaire (1; 11).

26. Configuration selon l'une quelconque des revendications 1 à 25, **caractérisée en ce que** le dispositif d'actionneur (3a, 3b; 4a, 4b; 5a, 5b) est réalisé à double ou à simple effet.

27. Configuration selon l'une quelconque des revendications 1 à 25, **caractérisée en ce que** le dispositif d'actionnement (3a, 3b; 4a, 4b; 5a, 5b) est réalisé avec une redondance double ou multiple.

28. Configuration selon l'une quelconque des revendications 1 à 27, **caractérisée en ce qu'**une moulure creuse (8) est formée sur le côté arrière de l'aile (1; 2) sur laquelle la face de séparation (6; 7) est installée, moulure creuse dans laquelle la face de séparation (6; 7) est déplaçable dans une position retirée hors de la région de fente (9), dans laquelle l'aile auxiliaire (1; 11) peut être rentrée sur l'aile principale (2) en fermant la région de fente (9).

29. Configuration selon la revendication 28, **caractérisée en ce que** le contour de la face de séparation (6; 7) dans la position retirée est adapté sensiblement au contour de la moulure creuse (8).

30. Configuration selon l'une quelconque des revendications 1 à 29, **caractérisée en ce que** l'aile auxiliaire est un bec mobile (1) ou un volet d'atterrissage (11).
